# EUROPEAN PATENT SPECIFICATION

(11) **EP 2 886 825 B1**
(45) Date of publication and mention of the grant of the patent: **19.04.2017**
(21) Application number: 13198838.8
(22) Date of filing: 20.12.2013
(51) Int. Cl.: F02B 41/10

(54) **Improved turbocompound system, in particular in the field of industrial vehicles**
Verbessertes Turbocompound-System, insbesondere im Bereich von Industriefahrzeugen
Système de turborécupération amélioré, en particulier dans le domaine des véhicules industriels

(43) Date of publication of application: 24.06.2015
(73) Proprietor: FPT Motorenforschung AG, 9320 Arbon (CH)
(72) Inventor: Jaeger, Laurentius, 8048 ZUERICH (CH)
(74) Representative: Franzolin, Luigi

(56) References cited:
- EP-A1- 0 420 705
- WO-A1-2012/003880
- WO-A1-2013/091669
- DE-A1- 10 204 066
- DE-A1-102010 047 518
- JP-A- S61 175 240

## Description

### Field of the invention

The present invention relates to an improved turbocompound system, in particular in the field of industrial vehicles.

### Description of the prior art

Turbocompound systems are known since the late 60's.

For example the US patent N. 4100742 shows a classical turbocompound configuration, wherein a first turbine stage driving a compressor, while a second turbine stage is geared with the crankshaft in order to help the combustion engine. A hydrodynamic coupling is commonly used in to connect the power turbine to the crank train. this type of connection prevents the torsional vibrations of the crank shaft that are magnified by the high gear ratios of the transmission between crank shaft and turbine to affect the turbine.

Usually, when the engine speed exceeds a predefined value, the power turbine is disconnected from the crank train in order not to induce the combustion engine exceed its maximum allowable speed.

WO 2013/091669 discloses a turbocompound scheme, whose features are in the preamble of claim 1.

### Summary of the invention

The main object of the present invention to provide an improved turbocompound system, suitable to improve the overall efficiency of the known systems.

The main principle of the invention is to stably gear an electric generator with the power turbine, in order to control its speed by exploiting its mechanical energy, when the power turbine is disconnected from the crank train.

This electrical energy can be transferred to the engine electrical system e.g. to be stored within the vehicular batteries that can be of any kind of technology or within specific super capacitors.

With the present invention it is possible as well to exploit electrical energy from an outside source: The electric machine is then operated as a motor that transfers power to the crank train, while the clutch of the power turbine is closed.

Therefore, a first object of the present invention is an improved turbocompound system.

Another object of the present invention is a method of controlling said turbocompound system.

A further object of the present invention is a vehicle comprising said turbocompound system.

Thanks to the present invention, instead of bypassing the power turbine, when the latter is mechanically decoupled from the crank train, the power turbine is always active either for cooperating with the crankshaft, or for producing electric energy, or both.

According to a preferred embodiment of the present invention, the electric machine is coupled with the vehicular batteries through a power adapter that can be controlled in order to offer a variable load to the power turbine according to the operating conditions of the engine.

Preferably, the electric machine, can be controlled in order to work as a motor, thus for cooperating with the power turbine during vehicular acceleration phases in helping the crankshaft.

Preferably, the controllable clutch connecting the power turbine with the crank train is hydrodynamic type, and the electric motor is directly geared on the power turbine portion of the hydrodynamic clutch.

These and further objects are achieved by means of the attached claims, which describe preferred embodiment of the invention, forming an integral part of the present description.

### Brief description of the drawings

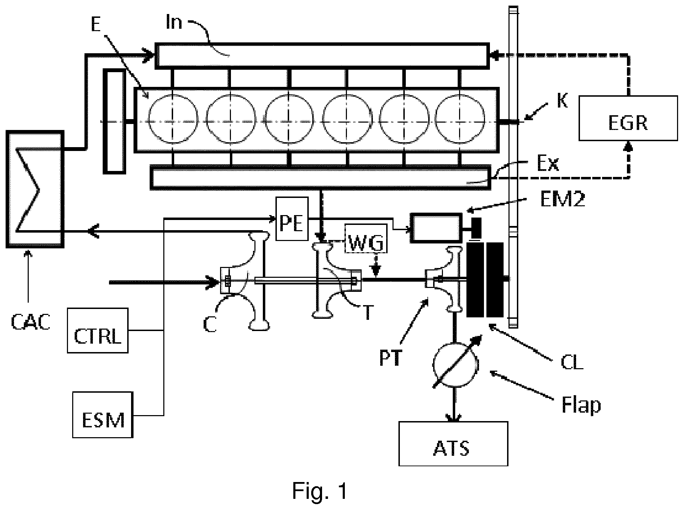

The invention will become fully clear from the following detailed description, given by way of a mere exemplifying and non limiting example, to be read with reference to the attached drawing figures, wherein Fig. 1 shows the improved turbocompound system according to the present invention. The same reference numerals and letters in the figures designate the same or functionally equivalent parts.

### Detailed description of the preferred embodiments

According to figure 1 a combustion engine E, for example Diesel type, has an intake manifold In and an exhaust manifold Ex. A turbocharger unit T, C defines a first supercharging stage (optional), having the first turbine T operatively connected immediately downstream of the exhaust manifold Ex. The compressor C, driven by the first turbine T, sucks fresh air from the ambient, compresses it, while the intercooler unit CAC cools the compressed air before entering into the intake manifold In.

An EGR system and a wastegate valve WG can be implemented. In addition, the turbine T can be variable geometry type.

A second turbine PT is arranged on the exhaust gas line IL, downstream said first turbine T, if present, according the flow of the exhaust gasses.

Also the power turbine can be variable geometry type.

Such second turbine, is hereinafter called as power turbine, being coupled with the engine crankshaft K through a clutch CL and gears G for adapting the power turbine speed with the engine speed.

The power turbine is stably paired with an electric motor EM. The electric motor is electrically connected with the external electric system of the engine or vehicle that contain means for storing electric energy ESM that could be of any type.

For example, said storage means ESM can be the usual lead battery used for restarting the combustion engine and for assuring the operating of the onboard auxiliary services and/or traction batteries (lithium, supercapacitors or the like), specifically adopted in the field of the electric and hybrid vehicles.

Control means CTRL control the operation of the clutch and of the electric machine EM via the power electronics PE, namely an inverter or the like.

In particular, the control means are adapted
- to command the opening of said clutch, namely the disconnection of the power turbine from the crankshaft, when the combustion engine speed exceeds a predefined value in engine brake mode and motored mode;
- to control then said electric motor/generator to limit turbine speed by generating electric energy to be stored within the storage means ESM,in order to extract as much work as possible from the drivetrain, for storage as electric power in the batteries.

In case the vehicle is not provided of traction batteries, a suitable resistance can be implemented for dissipating an exceeding amount of electric energy that cannot be stored within the lead batteries.

In a following phase, the engine speed falls under said predefined value, thus the clutch is closed.

If the vehicle is provided with traction batteries, during a following acceleration phase, the electric motor/generator is controlled in order to work as a motor by cooperating with the power turbine for helping the crankshaft and by exploiting the electric energy previously stored within said storage means ESM.

The engine speed is usually detected through a speed sensor. Thanks to the present invention, the electric energy is produced without subtracting mechanical energy by the combustion engine, through a really compact scheme, and, above all, through a few changes with respect to a known turbocompound system. Thus, not only the fuel consumption is reduced, but also the load response and engine brake capability of the engine system is improved.

According to a preferred embodiment of the present invention, said clutch is hydrodynamic type. Therefore, the opening of the clutch is carried out by cutting the hydrodynamic oil of the clutch.

According to another embodiment of the invention said electric motor/generator EM replaces completely the well known engine alternator. In other words, the vehicle implementing the present turbocompound system does not have another electric generator. In such a case, the EM is controlled in order to work as generator, by offering a variable load, not only when the power turbine is disconnected from the crankshaft, but also during other conditions, for example when the engine has a constant speed and/or during decelerating phases.

According to another embodiment of the invention said electric motor/generator EM replaces completely the well known engine starter. In other words, the vehicle implementing the present turbocompound system does not have another electric starter. In such a case, the EM is controlled in order to work as a combustion engine starter, powered by the batteries, with the clutch closed to start the engine.

According to a preferred embodiment of the invention, a flap can be arranged downstream of said power turbine PT along said exhaust line.

During engine braking operation, namely when the fuel supply is cut and the engine is motored by the vehicle inertia, the flap can be closed in order to develop a backpressure, which increases the pumping job of the combustion engine and thus the engine braking effect.

According to another preferred embodiment of the invention, the power turbine has a variable and controllable geometry and the flap is not present. During engine braking operation, the power turbine is controlled in order to close the scroll, by reducing its outflow section, thus generating a high backpressure. The electric motor/generator is controlled in order to work as generator, by offering a suitable load to the power turbine. In particular, the generator EM is controlled in order to maintain the power turbine speed under a second predetermined speed while the clutch is open.

The control of the electric motor/generator and of the clutch and of the power turbine, in case the latter has a controllable variable geometry, is carried out by control means that can be integrated within the engine control unit ECU or in another specific control unit.

This invention can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention as defined by the appended claims are deemed to be covered by this invention.

Further implementation details will not be described, as the man skilled in the art is able to carry out the invention starting from the teaching of the above description.

## Claims

1. Improved turbocompound system, in particular in the field of industrial vehicles, comprising a combustion engine (E) having
- a crankshaft (K),
- an exhaust gas line (EL),
- a power turbine (PT) arranged on said exhaust gas line (EL), operatively coupled with said crankshaft (K) through a clutch (CL),
- means for detecting the combustion engine speed,
- control means (CTRL) for controlling said clutch,
Wherein an electric motor/generator is operatively coupled with a shaft of said power turbine (PT) and electric storage means (ESM) are coupled with said electric motor/generator to store electric energy produced by said electric motor/generator and wherein, when the combustion engine speed exceeds its maximum allowable speed, said control means are adapted
- to command the opening of said clutch and
- to control said electric motor/generator in order to offer a suitable mechanical load to said power turbine, by producing said electric energy.

2. Turbocompound system according to claim 1, wherein said control means (CTRL) are adapted to command the closing of said clutch when the combustion engine speed falls under said predefined value.

3. Turbocompound system according to claims 1 or 2, wherein said predefined engine speed value can be change according to a fired or motored or engine brake condition.

4. Turbocompound system according to one of the claims 1 - 3, wherein said control means (CTRL) are adapted to control said motor/generator in order to work as a motor during an accelerating phase of the engine, by cooperating with the power turbine for helping the crankshaft (K).

5. Turbocompound system according to any of the previous claims 1 - 4, wherein said electric motor/generator (EM) replaces completely an engine alternator, so that said control means (CTRL) control said electric motor/generator (EM) in order to work as generator, by offering a variable load, also when the engine has a constant and/or decreasing speed.

6. Turbocompound system according to any of the previous claims 1 - 5, wherein said electric motor/generator (EM) replaces completely an engine starter, so that said control means (CTRL) are adapted to control said electric motor/generator (EM) in order to work as a combustion engine starter, whereas the clutch is closed.

7. Turbocompound system according to any of the previous claims 1 - 5, wherein said power turbine has a variable controllable geometry and wherein said control means are adapted to control said geometry.

8. Turbocompound system according to claim 6, wherein, during engine braking operation, said control means are adapted to control the closing of said geometry in order to reduce its outflow section, and to control the electric motor/generator (EM) in order to work as generator, by offering a suitable load to the power turbine.

9. Industrial vehicle comprising a turbocompound system, according to any of the previous claims from 1 to 8.

10. Method of controlling a turbocompound system, in particular in the field of industrial vehicles, the turbocompound system comprising a combustion engine (E) having
- a crankshaft (K),
- an exhaust gas line (EL),
- a power turbine (PT) arranged on said exhaust gas line (EL), operatively coupled with said crankshaft (K) through a clutch
- means for detecting the combustion engine speed,
- control means (CTRL) for controlling said clutch,
- an electric motor/generator operatively coupled with a shaft of said power turbine (PT) and
- electric storage means (ESM) coupled with said electric motor/generator to store electric energy produced by said electric motor/generator,
the method comprising the all the following steps
- checking the combustion engine speed exceeds its maximum allowable speed, then
- commanding the opening of said clutch and
- controlling said electric motor/generator in order to offer a suitable mechanical load to said power turbine, by producing said electric energy.

11. Method according to claim 10, further comprising the step of closing said clutch when the combustion engine speed falls under said predefined value.

12. Method according to claims 10 or 11, wherein said predefined engine speed value can be change according to a fired or motored or engine brake condition.

13. Method according to any of the previous claims 10 - 12, wherein said electric motor/generator (EM) replaces completely an engine alternator, so that said electric motor/generator (EM) in controlled in order to work as generator, by offering a variable load, also when the engine has a constant and/or decreasing speed.

14. Method according to any of the previous claims 10 - 13, wherein said electric motor/generator (EM) replaces completely an engine starter, so that said electric motor/generator (EM) is controlled in order to work as a combustion engine starter, whereas the clutch is closed.

15. Method according to any of the previous claims 10 - 14, wherein said power turbine has a variable controllable geometry and the method further comprises the step of controlling said geometry by closing said geometry in order to reduce its outflow section, and controlling the electric motor/generator (EM) in order to work as generator, by offering a suitable load to the power turbine.

16. Computer program comprising computer program code means adapted to perform all the steps of any claim from 10 to 15, when said program is run on a computer.

17. A computer readable medium having a program recorded thereon, said computer readable medium comprising computer program code means adapted to perform all the steps of any claim from 10 to 15, when said program is run on a computer.

## Patentansprüche

1. Verbessertes Turbocompound-System, insbesondere im Bereich von Industriefahrzeugen, das einen Verbrennungsmotor (E) umfasst, der Folgendes aufweist:
- eine Kurbelwelle (K),
- eine Abgasleitung (EL),
- eine Abgasturbine (PT), die auf der Abgasleitung (EL) eingerichtet ist, die durch eine Kupplung (CL) betriebsfähig mit der Kurbelwelle (K) gekoppelt ist,
- Mittel zum Ermitteln der Verbrennungsmotor-Drehzahl,
- Steuerungsmittel (CTRL) zum Steuern der Kupplung, wobei ein Elektromotor/Generator betriebsfähig mit einer Welle der Abgasturbine (PT) gekoppelt ist und Elektrospeichermittel (ESM) mit dem Elektromotor/Generator gekoppelt sind, um durch den Elektromotor/Generator erzeugte elektrische Energie zu speichern, und wobei, wenn die Verbrennungsmotor-Drehzahl ihre maximal zulässige Drehzahl überschreitet, die Steuerungsmittel für Folgendes angepasst sind:
- zum Steuern der Öffnung der Kupplung und
- zum Steuern des Elektromotors/Generators, um der Abgasturbine eine zweckmäßige mechanische Last zu bieten, indem die elektrische Energie erzeugt wird.

2. Turbocompound-System nach Anspruch 1, wobei die Steuerungsmittel (CTRL) angepasst sind, um das Schließen der Kupplung zu befehlen, wenn die Verbrennungsmotor-Drehzahl unter den vordefinierten Wert fällt.

3. Turbocompound-System nach Anspruch 1 oder 2, wobei der vordefinierte Motordrehzahlwert sich gemäß einem gezündeten oder angetriebenen oder Motorbremszustand ändern kann.

4. Turbocompound-System nach einem der Ansprüche 1 bis 3, wobei die Steuerungsmittel (CTRL) angepasst sind, um den Motor/Generator zu steuern, um während einer Beschleunigungsphase des Motors durch Zusammenwirken mit der Abgasturbine als ein Antrieb zu wirken, um der Kurbelwelle (K) zu helfen.

5. Turbocompound-System nach einem der vorhergehenden Ansprüche 1 bis 4, wobei der Elektromotor/Generator (EM) einen Motorwechselstromgenerator vollständig ersetzt, derart, dass die Steuerungsmittel (CTRL) den Elektromotor/Generator (EM) steuern, um durch Bieten einer variablen Last, auch wenn der Motor eine konstante und/oder abnehmende Drehzahl aufweist, als Generator zu arbeiten.

6. Turbocompound-System nach einem der vorhergehenden Ansprüche 1 bis 5, wobei der Elektromotor/Generator (EM) einen Motoranlasser vollständig ersetzt, derart, dass die Steuerungsmittel (CTRL) angepasst sind, um den Elektromotor/Generator (EM) zu steuern, um als ein Verbrennungsmotoranlasser zu arbeiten, während die Kupplung geschlossen ist.

7. Turbocompound-System nach einem der vorhergehenden Ansprüche 1 bis 5, wobei die Abgasturbine eine variable steuerbare Geometrie aufweist und wobei die Steuerungsmittel angepasst sind, um die Geometrie zu steuern.

8. Turbocompound-System nach Anspruch 6, wobei während der Motorbremsbetätigung die Steuerungsmittel angepasst sind, um das Schließen der Geometrie zu steuern, um ihren Ausströmungsquerschnitt zu verringern und um den Elektromotor/Generator (EM) zu steuern, um als Generator zu arbeiten, indem der Abgasturbine eine zweckmäßige Last geboten wird.

9. Industriefahrzeug, das ein Turbocompound-System nach einem der vorhergehenden Ansprüche 1 bis 8 umfasst.

10. Verfahren zum Steuern eines Turbocompound-Systems, insbesondere im Bereich der Industriefahrzeuge, wobei das Turbocompound-System einen Verbrennungsmotor (E) umfasst, der Folgendes aufweist:
- eine Kurbelwelle (K),
- eine Abgasleitung (EL),
- eine Abgasturbine (PT), die auf der Abgasleitung (EL) eingerichtet ist, die durch eine Kupplung betriebsfähig mit der Kurbelwelle (K) gekoppelt ist,
- Mittel zum Ermitteln der Verbrennungsmotor-Drehzahl,
- Steuerungsmittel (CTRL) zum Steuern der Kupplung,
- einen Elektromotor/Generator, der betriebsfähig mit einer Welle der Abgasturbine (PT) gekoppelt ist, und
- Elektrospeichermittel (ESM), die mit dem Elektromotor/Generator gekoppelt sind, um durch den Elektromotor/Generator erzeugte elektrische Energie zu speichern,
wobei das Verfahren alle die folgenden Schritte umfasst:
- Prüfen, ob die Verbrennungsmotor-Drehzahl ihre maximal zulässige Drehzahl überschreitet, dann
- Befehlen der Öffnung der Kupplung und
- Steuern des Elektromotors/Generators, um der Abgasturbine durch Erzeugen der elektrischen Energie eine zweckmäßige mechanische Last zu bieten.

11. Verfahren nach Anspruch 10, das ferner den Schritt zum Schließen der Kupplung umfasst, wenn die Verbrennungsmotor-Drehzahl unter den vordefinierten Wert fällt.

12. Verfahren nach Anspruch 10 oder 11, wobei der vordefinierte Motordrehzahlwert sich gemäß einem gezündeten oder angetriebenen oder Motorbremszustand ändern kann.

13. Verfahren nach einem der vorhergehenden Ansprüche 10 bis 12, wobei der Elektromotor/Generator (EM) einen Motorwechselstromgenerator vollständig ersetzt, derart, dass der Elektromotor/Generator (EM) gesteuert wird, um als Generator zu arbeiten, indem eine variable Last geboten wird, auch wenn der Motor eine konstante und/oder abnehmende Drehzahl aufweist.

14. Verfahren nach einem der vorhergehenden Ansprüche 10 bis 13, wobei der Elektromotor/Generator (EM) einen Motoranlasser vollständig ersetzt, derart, dass der Elektromotor/Generator (EM) gesteuert wird, um als ein Verbrennungsmotoranlasser zu arbeiten, während die Kupplung geschlossen ist.

15. Verfahren nach einem der vorhergehenden Ansprüche 10 bis 14, wobei die Abgasturbine eine variable steuerbare Geometrie aufweist und das Verfahren ferner den Schritt der Steuerung der Geometrie durch Schließen der Geometrie, um ihren Ausströmungsquerschnitt zu verringern, und Steuern des Elektromotors/Generators (EM) umfasst, um als Generator zu arbeiten, indem der Abgasturbine eine zweckmäßige Last geboten wird.

16. Computerprogramm, das Computerprogrammcodemittel umfasst, die angepasst sind, um alle die Schritte nach einem der Ansprüche 10 bis 15 durchzuführen, wenn das Programm auf einem Computer ausgeführt wird.

17. Maschinenlesbarer Datenträger, der ein darauf aufgezeichnetes Programm aufweist, wobei der maschinenlesbare Datenträger ComputerprogrammCodemittel umfasst, die angepasst sind, um alle die Schritte nach einem der Ansprüche 10 bis 15 durchzuführen, wenn das Programm auf einem Computer ausgeführt wird.

## Revendications

1. Système de turbo-compound amélioré, en particulier dans le domaine des véhicules industriels, comprenant un moteur à combustion interne (E) comportant
- un vilebrequin (K),
- une conduite de gaz d'échappement (EL),
- une turbine de puissance (PT) agencée sur ladite conduite de gaz d'échappement (EL), accouplée de manière fonctionnelle au dit vilebrequin (K) par l'intermédiaire d'un embrayage (CL),
- des moyens pour détecter la vitesse du moteur à combustion interne,
- des moyens de commande (CTRL) pour commander ledit embrayage,
dans lequel un moteur/génératrice électrique est accouplé de manière fonctionnelle à un arbre de ladite turbine de puissance (PT) et des moyens de stockage électrique (ESM) sont couplés au dit moteur/génératrice électrique pour stocker l'énergie électrique produite par ledit moteur/génératrice électrique, et dans lequel, lorsque la vitesse du moteur à combustion interne dépasse sa vitesse autorisée maximum, lesdits moyens de commande sont conçus
- pour commander l'ouverture dudit embrayage, et
- pour commander ledit moteur/génératrice électrique afin d'appliquer une charge mécanique appropriée à ladite turbine de puissance, en produisant ladite énergie électrique.

2. Système de turbo-compound selon la revendication 1, dans lequel lesdits moyens de commande (CTRL) sont conçus pour commander la fermeture dudit embrayage lorsque la vitesse du moteur à combustion interne tombe au-dessous de ladite valeur prédéfinie.

3. Système de turbo-compound selon la revendication 1 ou 2, dans lequel ladite valeur de vitesse de moteur à combustion interne prédéfinie peut être changée conformément à une condition d'allumage, de motorisation, ou de freinage moteur.

4. Système de turbo-compound selon l'une des revendications 1 à 3, dans lequel lesdits moyens de commande (CTRL) sont conçus pour commander ledit moteur/génératrice afin qu'il travaille en tant que moteur pendant une phase d'accélération du moteur, en coopérant avec la turbine de puissance pour aider le vilebrequin (K).

5. Système de turbo-compound selon l'une quelconque des revendications 1 à 4 précédentes, dans lequel ledit moteur/génératrice électrique (EM) remplace complètement un alternateur de moteur à combustion interne, de sorte que lesdits moyens de commande (CTRL) commandent ledit moteur/génératrice électrique (EM) afin qu'il travaille en tant que génératrice, en offrant une charge variable, également lorsque le moteur à combustion interne a une vitesse constante et/ou décroissante.

6. Système de turbo-compound selon l'une quelconque des revendications 1 à 5 précédentes, dans lequel ledit moteur/génératrice électrique (EM) remplace complètement un démarreur de moteur à combustion interne, de sorte que lesdits moyens de commande (CTRL) sont conçus pour commander ledit moteur/génératrice électrique (EM) afin qu'il travaille en tant que démarreur de moteur à combustion interne, tandis que l'embrayage est fermé.

7. Système de turbo-compound selon l'une quelconque des revendications 1 à 5 précédentes, dans lequel ladite turbine de puissance a une géométrie à commande variable, et dans lequel lesdits moyens de commande sont conçus pour commander ladite géométrie.

8. Système de turbo-compound selon la revendication 6, dans lequel, pendant une opération de freinage moteur, lesdits moyens de commande sont conçus pour commander la fermeture de ladite géométrie afin de réduire sa section de flux de sortie, et pour commander le moteur/génératrice électrique (EM) afin qu'il travaille en tant que génératrice, en appliquant une charge appropriée à la turbine de puissance.

9. Véhicule industriel comprenant un système de turbo-compound, selon l'une quelconque des revendications 1 à 8 précédentes.

10. Procédé pour commander un système de turbo-compound, en particulier dans le domaine des véhicules industriels, le système de turbo-compound comprenant un moteur à combustion interne (E) comportant
- un vilebrequin (K),
- une conduite de gaz d'échappement (EL),
- une turbine de puissance (PT) agencée sur ladite conduite de gaz d'échappement (EL), accouplée de manière fonctionnelle au dit vilebrequin (K) par l'intermédiaire d'un embrayage,
- des moyens pour détecter la vitesse du moteur à combustion interne,
- des moyens de commande (CTRL) pour commander ledit embrayage,
- un moteur/génératrice électrique accouplé de manière fonctionnelle à un arbre de ladite turbine de puissance (PT), et
- des moyens de stockage électrique (ESM) couplés au dit moteur/génératrice électrique pour stocker l'énergie électrique produite par ledit moteur/génératrice électrique,
le procédé comprenant toutes les étapes suivantes :
- de vérification que la vitesse du moteur à combustion interne dépasse sa vitesse autorisée maximum, ensuite
- de commande de l'ouverture dudit embrayage, et
- de commande dudit moteur/génératrice électrique afin d'appliquer une charge mécanique appropriée à ladite turbine de puissance, en produisant ladite énergie électrique.

11. Procédé selon la revendication 10, comprenant en outre l'étape de fermeture dudit embrayage lorsque la vitesse du moteur à combustion interne tombe au-dessous de ladite valeur prédéfinie.

12. Procédé selon la revendication 10 ou 11, dans lequel ladite valeur de vitesse de moteur à combustion interne prédéfinie peut être changée conformément à une condition d'allumage, de motorisation ou de freinage moteur.

13. Procédé selon l'une quelconque des revendications 10 à 12 précédentes, dans lequel ledit moteur/génératrice électrique (EM) remplace complètement un alternateur de moteur à combustion interne, de sorte que ledit moteur/génératrice électrique (EM) est commandé afin de travailler en tant que génératrice, en offrant une charge variable, également lorsque le moteur à combustion interne a une vitesse constante et/ou décroissante.

14. Procédé selon l'une quelconque des revendications 10 à 13 précédentes, dans lequel ledit moteur/génératrice électrique (EM) remplace complètement un démarreur de moteur, de sorte que ledit moteur/génératrice électrique (EM) est commandé afin qu'il travaille en tant que démarreur de moteur à combustion interne, alors que l'embrayage est fermé.

15. Procédé selon l'une quelconque des revendications 10 à 14 précédentes, dans lequel ladite turbine de puissance a une géométrie à commande variable, et le procédé comprend en outre l'étape de commande de ladite géométrie en fermant ladite géométrie afin de réduire sa section de flux de sortie, et de commande du moteur/génératrice électrique (EM) afin qu'il travaille en tant que génératrice, en appliquant une charge appropriée à la turbine de puissance.

16. Programme d'ordinateur comprenant des moyens formant code de programme d'ordinateur conçus pour effectuer toutes les étapes de l'une quelconque des revendications 10 à 15, lorsque ledit programme est exécuté sur un ordinateur.

17. Support pouvant être lu par un ordinateur sur lequel un programme est enregistré, ledit support pouvant être lu par un ordinateur comprenant des moyens formant code de programme d'ordinateur conçus pour effectuer toutes les étapes de l'une quelconque des revendications 10 à 15, lorsque ledit programme est exécuté sur un ordinateur.
